# EUROPEAN PATENT SPECIFICATION

(11) **EP 4 007 909 B1**
(45) Date of publication and mention of the grant of the patent: **03.04.2024**
(21) Application number: 20764450.1
(22) Date of filing: 03.08.2020
(51) Int. Cl.: G01N 21/80, G01N 21/78, G01N 31/22

(54) **COLORIMETRIC SENSOR FOR PH MEASUREMENTS**
KOLORIMETRISCHER SENSOR FÜR PH-MESSUNGEN
DÉTECTEUR COLORIMÉTRIQUE DESTINÉ À DES MESURES DE PH

(30) Priority: 02.08.2019 IT 201900013878
(43) Date of publication of application: 08.06.2022
(73) Proprietor: Universita' Degli Studi Di Padova, 35122 Padova (IT)
(72) Inventor: CAPPELLIN, Luca, 35122 Padova (IT); PASTORE, Paolo, 35122 Padova (IT); BADOCCO, Denis, 35122 Padova (IT); PASTORE, Andrea, 35122 Padova (IT)
(74) Representative: Manfrin, Marta
(86) International application number: PCT/IB2020/057318
(87) International publication number: WO 2021/024156

(56) References cited:
- US-A1- 2018 231 513
- Issa M El Nahhal ET AL: "Thin film optical BTB pH sensors using sol-gel method in presence of surfactants", International Nano Letters, December 2012 (2012-12), pages 1-9, XP055694074, Berlin/Heidelberg DOI: 10.1186/2228-5326-2-16 Retrieved from the Internet: URL:https://link.springer.com/content/pdf/ 10.1186/2228-5326-2-16.pdf [retrieved on 2020-05-13]
- G H Mohr ET AL: "Tailoring colour changes of optical sensor materials by combining indicator and inert dyes and their use in sensor layers, textiles and non-wovens", Sensors and Actuators B, January 2015 (2015-01), pages 788-793, XP055694171, DOI: :10.1016/j.snb.2014.09.104 Retrieved from the Internet: URL:https://www.sciencedirect.com/science/ article/pii/S0925400514011940 [retrieved on 2020-05-12]
- SONIA CAPEL-CUEVAS ET AL: "A Compact Optical Instrument with Artificial Neural Network for pH Determination", SENSORS, vol. 12, no. 5, 22 May 2012 (2012-05-22), pages 6746-6763, XP055694807, DOI: 10.3390/s120506746

## Description

### Technical field of the invention

The present invention finds application in the field of optoelectronic sensors.

### Background art

A colorimetric sensor (CSA = *Colorimetric Sensor Array*) generally consists of a membrane, conveniently supported, characterized by the presence of sensitive molecules which take on a certain color depending on the concentration of the analyte in hand.

The immobilization of indicator molecules plays a key role in the analytical performance of a CSA.

In the literature, the arrays used include: cellulose acetate, sol-gel, PVC, acrylic-methacrylic copolymer and different compounds based on the system SiO₂/ZrO₂-styrene.

The various strategies used include the retention of the dye on ion exchange resins such as Amberlite or adsorption on materials such as styrene/divinylbenzene copolymer, cellulose, or cellulose acetate.

Lastly, it is also possible to create covalent bonds with the membrane using different polymers such as polyacrylamide, agarose, or polyamides.

In the latter case, although the leaching problem has been solved, the response times are very long (>>3 min) .

The choice of an appropriate color space is equally crucial in the intent to create a sensor with accuracy comparable to the pH meter.

This aspect is very useful because it allows to minimize the problems associated with the acquisition of images by the device, the problem of sensor non-homogeneity due to the deposition technique used and the variation in the concentration of the indicator due to leaching.

However, in the presence of these phenomena, the color saturation value turns out to be significantly lower, leading to an increase in the error on the discriminated pH which is not resolved by the choice of the color space alone.

All the CSAs findable in the background art for pH determination are affected by multiple problems:
1. Narrow measuring range and/or
2. Low pH prediction accuracy (error>>0.02 pH units) and/or
3. Long response times and/or
4. Non reversibility and/or
5. Leaching for pH > 9.
The background art document by Issa M El Nahhal et al ("Thin film optical BTB pH sensors using sol-gel method in presence of surfactants", International Nano Letters, December 2012) describes some improvements of pH sensors made with thin sol-based TEOS gel films containing a pH indicator and a surfactant. The signal is not colorimetric since it involved the use of a spectrophotometer; therefore, a colorimetric sensor is not described. The colorimetric signal is provided by the color coordinates such as RGB, HSV, etc. In the background art documents by GH Mohr et al ("Tailoring colour changes of optical sensor materials by combining indicator and inert dyes and their use in sensor layers, textiles and non-wovens", Sensors and Actuators B, January 2015) and SONIA CAPEL-CUEVAS ET AL ("A Compact Optical Instrument with Artificial Neural Network for pH Determination", SENSORS, vol. 12, n. 5, 22 May 2012) the use of various individual indicators in each spot to read the pH value is described. On the contrary, in the device of the present invention, there is a modulation of the surfactant concentration, so that each spot is characterized by a different surfactant concentration, which produces a displacement of the calibration position. The modulation of the surfactant produces the variation of the indicator pKa which may be used in a wide range of pH.

### Summary of the invention

The authors of the present invention have surprisingly found that it is possible to obtain a colorimetric sensor which solves and overcomes the limits of the sensors of the background art.

### Object of the invention

A first object of the present invention is a colorimetric sensor array as defined in claim 1.

In a second object, the invention describes a process for preparing the colorimetric sensor array as defined in claim 13.

In a third object, a method for measuring an analyte is defined in claim 17.

### Brief description of the drawings

Figure 1A shows an image of a CSA, consisting of an array of hand-deposited spots, with various molar ratios of Tetrabromophenol Blue (TBB)/Bromothymol Blue (BB) (above) or TBB/Phenol Red (PR) (below). The molar ratio increases in the direction of the arrows from bottom to top while pH increases from left to right.
Figure 1B shows the components of the CSA calibration cell: a) Camera; b) Housing for the camera under which 6 LED D65s are circularly arranged; c) Circular support in which the sensor may be inserted.
Figure 2 shows as an example the calibration curves of the indicators TBB, BB and PR. The repetition of the calibration curves verifies the reversibility of the sensor of the present invention.

### Detailed description of the invention

For the purposes of the present invention, the term *spot* (or sensor) is intended as an area, preferably circular, resulting from the application of a preparation comprising an indicator and a surfactant on a support. In fact, it represents a single sensor.

For the present purposes, the term colorimetric sensor array (or simply array, or CSA = *Colorimetric Sensor Array*) is intended as a set of a plurality of spots on the same support.

Therefore, a first object of the invention is a colorimetric sensor comprising a preparation of a colorimetric indicator and a surfactant.

More in particular, this sensor is in the form of a polymeric membrane of organic-inorganic nature.

This preparation is deposited and adsorbed on a solid porous support, in particular shortly after having been prepared in the form of sol, as detailed below.

According to an aspect of the present invention, the described sensor comprises a preparation of an indicator, a dye (which could also be an indicator) and a surfactant.

According to a particular aspect of the present invention, there may be two or more than two added dyes.

For example, the dyes used may be Bromocresol Green and Methyl Red.

For the purposes of the present invention, the support for the deposit is a porous PVDF membrane, having for example an average porosity of 0.2 um (for example sold by Bio-Rad).

Advantageously, by varying the porosity of the support (PVDF 0.2 um, Teflon 2.0 um) it is possible to improve the kinetics of the sensor, and therefore the response time.

As regards the preparation of the membrane (in the form of sol), this comprises: precursors, an indicator with the solvent thereof, a surfactant and acid or basic water (milli-Q).

### Precursors

The following precursors may be used for the purposes of the present invention: TEOS (tetraethyl orthosilicate), methyltrimethoxysilane (MTES), ethyltriethoxysilane (ETES), phenyltrimethoxysilane (FTMS), ethyltriethoxysilane (octyl-TEOS), dodecyltriethoxysilane (dodecyl-TEOS), hexadecyltrimethoxysilane.

In a preferred aspect of the invention at least two precursors are used for the preparation of the membrane, one of which is TEOS.

Even more preferably, the membranes are prepared starting from TEOS/octyl-TEOS.

Due to the presence of such precursors, the preparation is also referred to as OrMoSil.

### Indicator

The calibration sensitivity of a single sensor depends on the ratio Δ*H*/Δp*H*, where Δ*H* is the difference value between the H values of the dissociated and undissociated form of the indicator and ΔpH is the pH range within which the H coordinate varies.

The maximum possible value of Δ*H* depends on the choice of the indicator but hardly exceeds the value of 0.55.

For the purposes of the present invention, an indicator is selected from the group comprising: Cresol Red; Metacresol Purple; Thymol Blue; Carmine; Tetrabromophenol Blue; Methyl Orange; 2-4-dinitrophenol; Bromophenol Blue; Congo Red; Ethyl Orange; Alizarin Violet N; Bromocresol Green; Methyl Red; Propyl Red; Chlorophenol Red; Basic Green 4; Bromophenol Red; Nitrazine Yellow; Purple Pyrocatecol Violet; Bright Yellow; Nile Red; Resazurin; Aurin; Bromothymol Blue; Phenol Red; Orange II; Phenolphthalein; Xylenol Blue; Nile Blue; Thiazole Yellow.

The indicators which work in a broad pH range are: Bromophenol Blue (pH = 1.50-6.50), a mixture of Bromocresol Green and Methyl Red (pH = 2.00-8.00) and Bromothymol Blue (pH = 5.80-13.50) .

They are all characterized by a transition between complementary colors.

For the purposes of the present invention, the solvent is ethanol for almost all the indicators.

Nitrazine Yellow and Bright Yellow instead require 2-methoxy-ethanol.

### Surfactant

For the purposes of the present invention, the surfactant is a cationic surfactant, therefore capable of minimizing the repulsions between silanol groups and negatively charged indicator molecules, especially in basic environments.

It has been surprisingly found that surfactants having a chain of 16 carbon atoms are advantageously capable of preventing smoothing and irreversibility phenomena, such as, for example, hexadecyltrimethylammonium p-toluenesulfonate (CTApTs).

Stability tests with analogous compounds which differ only by the chain length (C = 8,10,12) have shown that the reversibility with chains shorter than C16 is incomplete.

C18 surfactants have an equally optimal sensitivity but the modulation of the H profile position occurs in a smaller pH range with respect to C16.

In a preferred aspect of the present invention, the surfactant/precursor ratio, and preferably of CTApTs/precursors, must be comprised between 0.05 and 0.40 g_{CTApTS}/g_{precursor}, and preferably between about 0.11 and 0.38 g_{CTApTs}/g_{precursor}.

### Dyes

Dyes which may be used for the purposes of the present invention are selected from the group comprising: Acid Green 25, Direct Blue 15, Trypan Blue, Methylene Blue.

Furthermore, some dyes may be used which by their nature are also indicators, such as, for example: Tetrabromophenol Blue (TBB), Indigo Carmine (IC).

In accordance with a second object of the invention, the preparation of the sensor is obtained with a process comprising the steps of:
a) hydrolysis of the precursors,
b) addition of the cationic surfactant,
c) addition of a solution of the indicator dissolved in a suitable solvent, while stirring, or
d) addition of a solution of an indicator dissolved in a suitable solvent and a solution of a dye dissolved in a suitable solvent.

In step a), preferably the above-mentioned precursors are added to water in the presence of hydrochloric acid.

In a preferred aspect of the invention, two precursors are added to water, one of which is TEOS.

In particular, hydrolysis catalyst hydrochloric acid is preferably added up to a pH of about 2.00.

In a preferred aspect of the invention the two precursors are TEOS and Ottil-TEOS.

The hydrolysis is carried out until the phase separation disappears; for this purpose, vigorous magnetic stirring may be required for about an hour.

In step b), the surfactant is added in an amount such that the surfactant/precursor ratio is between about 0.11 and 0.38 g_{CTApTs}/g_{precursor}.

In step c) the solvent preferably is ethanol or 2-methoxy-ethanol, conveniently chosen as a function of the indicator.

According to a particular aspect of the present invention, in step d) there may be two or more than two added dyes.

For example, the dyes used may be Bromocresol Green and Methyl Red.

In preferred aspects of the invention, the indicator concentration (in mg) for each gram of sol comprising precursors, water, hydrochloric acid, and surfactant (excluding the indicator solvent) is approximately:

| **Indicator** | **Range (mg)** | **Amount (mg)** |
|---|---|---|
| Bromochlorophenol blue (BCPB) | 6.5-6.7 | 6.61 |
| Bromocresol green (BCG) | 7.5-8.1 | 7.94 |
| Thymol blue (TB) | 0.80-1.0 | 0.90 |
| Bromothymol blue (BB) | 6.90-7.20 | 7.10 |
| Nitrazine yellow (NY) | 6.10-6.22 | 6.17 |
| Tetrabromophenol blue (TBB) | 8.9-9.1 | 8.97 |
| Bright yellow (BY) | 7.0-7.2 | 7.10 |
| Methyl red (MR) | 2.9-3.1 | 3.06 |
| M-cresol purple (CP) | 4.30-4.4 | 4.35 |
| Phenol red (PR) | 3.9-4.1 | 4.03 |
| Cresol red (CR) | 3.4-3.55 | 3.48 |
| Xylenol blue (XB) | 0.80-1.0 | 0.90 |
| Cresol purple (CP) | 3.4-3.55 | 3.48 |

Stirring may also be carried out for about 10 minutes.

More generally, the preparation of a colorimetric sensor may be prepared starting from:

| | |
|---|---|
| Precursors | 5.0-6.0 g |
| Water | 2.0-2.5 g |
| Hydrochloric acid | as needed up to approx. pH 2.00 |
| Surfactant | 0.4-2.1 g |
| Indicator | 0.8-9.1 mg |
| Solvent | 6.3-8.1 g |
| Dye | 0-3.0 mg |

To optimize the sensitivity of some indicators, it is possible to conduct a step d) in which a solution of one or two dyes (which could be, by their nature, independently of each other, indicators) is added to the sol of the indicator; in this way a preparation comprising an indicator and one or two dyes (or dye(s)/indicator) is obtained.

In preferred aspects of the present invention, the ratios between the indicator the performance of which is to be improved and the dye may be those reported in the following table:

| |
|---|
| 0.01<n_{TBB}/n_{XB}<0.19 |
| 0.18<n_{TBB}/n_{MR}<0.35 |
| 0.186<n_{TBB/}n_{PR}<0.324 |

TBB = Tetrabromophenol
Blue
XB = Xylenol Blue
MR=Methyl Red
PR=Phenol Red

According to an aspect of the present invention, in step c) or d) one or more additives capable of giving rise to chemical reactions with variation of pH may be added.

For this purpose, palladium chloride (II) and/or diethylethanolamine (DEEA) may be added.

The solution obtained (from step c) or from step d)) is then deposited on the support membrane, preferably PVDF, and is stored in a dry place protected from light for a period, for example three days, until completion of the polymerization.

For the purposes of the present invention, the deposition is carried so as to form spots with a diameter of a few mm.

The amount of sol deposited for each spot is about 90-105 µg, preferably about 95 µg.

A plurality of spots (thus forming the colorimetric sensor array), each of which comprises an indicator, is deposited on the support.

In the array, each spot stands out from the other spots for the concentration of surfactant.

The CSA preparation process may end, after step c) or step d), with the calibration step; this step is carried out by the manufacturer, since the deposition procedure is reproducible in time and space.

The support is then subjected to the steps of:
- maintenance at pH=1 for about 2 minutes and then washing with water (milli-Q),
- maintenance at pH=12 for about 2 minutes and then washing with water (milli-Q),
- maintenance at pH=1 for about 2 minutes and then washing with water (milli-Q).

During calibration, the support is immersed in various acid pH to basic pH buffer solutions for approximately 30-40 seconds, until equilibrium is reached for the *H* coordinate of the *HSV* color space.

The colorimetric sensor of the invention is suitable not only for measuring pH but also for measuring for example: amines, ethylene, carbon monoxide, carbon dioxide, sulfur dioxide, glucose, sugars.

In this case, it may be necessary to include further additives in the preparation of the indicator such as: palladium chloride (II) or diethylethanolamine (DEEA), which give rise to chemical reactions with variation of pH, and therefore color change of the individual spots.

In a third object, a method for measuring an analyte using the colorimetric sensor array of the invention is described.

Consequently, the described method allows to detect pH, presence of carbon dioxide, carbon monoxide, sulfur dioxide, amines, ethylene, sulfur dioxide, glucose, sugars.

In a preferred aspect of the invention, the described sensor is a pH sensor.

For the purposes of the present invention, the pH measurements are based on the *Hue* profile (H) of the *HSV* color space.

According to the present invention, after having been in contact with the analyte, a photographic image of said sensor or said array (i.e., of each sensor of said array) is acquired.

The H coordinate of a portion of each image is acquired, preferably as the median value of the pixels of the most homogeneous and saturated portion of each spot.

The acquisition of the color coordinates is preferably optimized if constant illumination is maintained with a D65 LED (medium sunlight).

### EXAMPLE 1

### Preparation of the membrane

Two *vials* are prepared, of which one corresponding to the lowest surfactant concentration (about 0.11 g_{CTApTs}/g_{precursor}; LOW) and one corresponding to the highest surfactant concentration (about 0.38 g_{CTApTs}/g_{precursor}; HIGH) starting from:

| **Component** | **LOW** | **HIGH** |
|---|---|---|
| | grams | |
| Water | 1.82 | 1.82 |
| HCl | 0.64 | 0.64 |
| CTApTS | 2.01 | 0.60 |
| Octyl-TEOS | 0.75 | 0.75 |
| TEOS | 4.64 | 4.64 |
| Gel/portion | 9.86 | 8.45 |
| Solvent | 7.36 | 6.35 |

The amount in mg of each indicator used is the same for the two *vials:*

| **Indicator** | **Range (mg)** | **Amount (mg)** |
|---|---|---|
| Bromochlorophenol blue (BCPB) | 6.5-6.7 | 6.61 |
| Bromocresol green (BCG) | 7.5-8.1 | 7.94 |
| Thymol blue (TB) | 0.8-1.0 | 0.9 |
| Bromothymol blue (BB) | 6.90-7.20 | 7.10 |
| Nitrazine yellow (NY) | 6.10-6.22 | 6.17 |
| Tetrabromophenol blue (TBB) | 8.9-9.1 | 8.97 |
| Bright yellow (BY) | 7.0-7.2 | 7.10 |
| Methyl red (MR) | 2.9-3.1 | 3.06 |
| M-cresol purple (CP) | 4.30-4.4 | 4.35 |
| Phenol red (PR) | 3.9-4.1 | 4.03 |
| Cresol red (CR) | 3.4-3.55 | 3.48 |
| Xylenol blue (XB) | 0.8-1.0 | 0.9 |
| Cresol purple (CP) | 3.4-3.55 | 3.48 |

From the two *vials*, once the indicator solution has been added, all the possible arrays with intermediate surfactant concentrations are obtained. The amount of solvent in the two *vials* (LOW, HIGH) is different to allow for a similar slope of the sigmoid of *H* vs pH throughout the surfactant modulation range.

### EXAMPLE 2

### Measurement reversibility

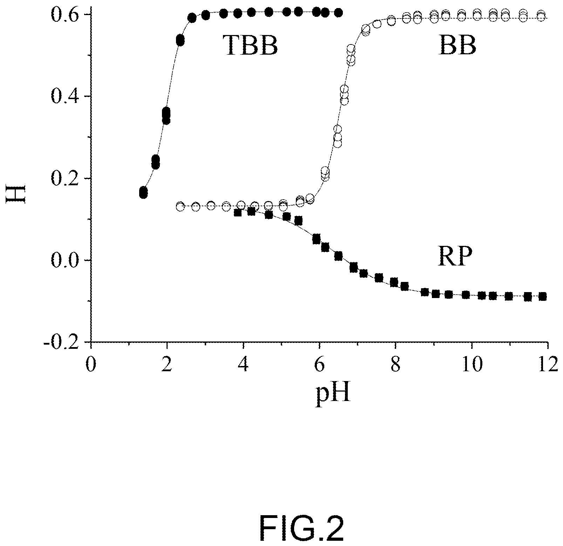

Figure 2 shows the results of an assay to verify the reversibility of the system of the present invention.

In the test illustrated, the profiles have already undergone a conditioning cycle demonstrating the high system reversibility. The fitting is related to the experimental points (about 150 for each indicator, performed on 5 identical spots) of TBB = Tetrabromophenol Blue, BB = Bromothymol Blue, PR = Phenol Red. The experimental data are obtained by immersing the sensor in different buffers from pH 1 to 12. The experimental point at pH = 6.865 is obtained with a standard buffer to the third decimal place and perfectly matches the experimental data fittings.

### EXAMPLE 3

### Calculation of the error on the discriminated pH and decrease of the error with the increase in the number of spots.

Using a single spot sensor with TBB indicator and CTApTs surfactant at concentration 0.38 g_{CTApTs}/g_{precursor} the pH prediction error, referred to as s_{pH} is equal to 0.012 at pH = 2.20.

With just two identical spots it decreases to s_{pH}=0.008.

By adding 15 spots with different concentrations of CTApTs in the range 0.11-0.38 g_{CTApTs}/g_{precursor}, the same precision is obtained throughout the range between pH = 2 and pH = 4. Since the spots have a diameter of 3 mm, an increase in the number thereof does not cause problems from a sensor size point of view.

### EXAMPLE 4

### Preparation of a CSA array according to the invention

OrMoSil sol was prepared by mixing the main components in this order: 4.03 g of TEOS, 0.65 g of Dodecyl-TEOS, 1.58 g of Milli-Q water and 0.55 g of aqueous solution of HCl at pH = 2.03. After 40-45 minutes under magnetic stirring at room temperature, the initial cloudy solution became transparent, due to the disappearance of the phase separation. 1.75 g of CTApTs cationic surfactant was then added, followed by stirring for 30 minutes. The pH indicator solution was then added to the sol under stirring for a further 5 minutes. The solutions of BB (bromothymol blue), TBB (tetrabromophenol blue) and PR (phenol red) were obtained by mixing 50.5, 79.7, 28.7 mg of indicator, respectively, in 6.40 g of ethanol. The total weight of each sol solution is 8.56 g. The sols of the individual indicators were then conveniently mixed. The amount of sol TBB added to the PR and BB vials corresponds to: 0 g, 0.3 g, 0.7 g, 1.1 g, 1.6 g, 2.1 g, 2.7 g, 3.7 g, and 5.4 g corresponding to a TBB molar/indicator ratio of: 0, 0.026, 0.061, 0.096, 0.140,0.184, 0.236, 0.324, 0.473, respectively.

PVDF supports (6 x 3.5 x 0.1 cm) were used as solid supports on which the OrMoSil sol was deposited through a steel bar (filed base with 1.6 mm diameter) at 20±2°C. The calibration was carried out in accordance with the description in the present patent application.

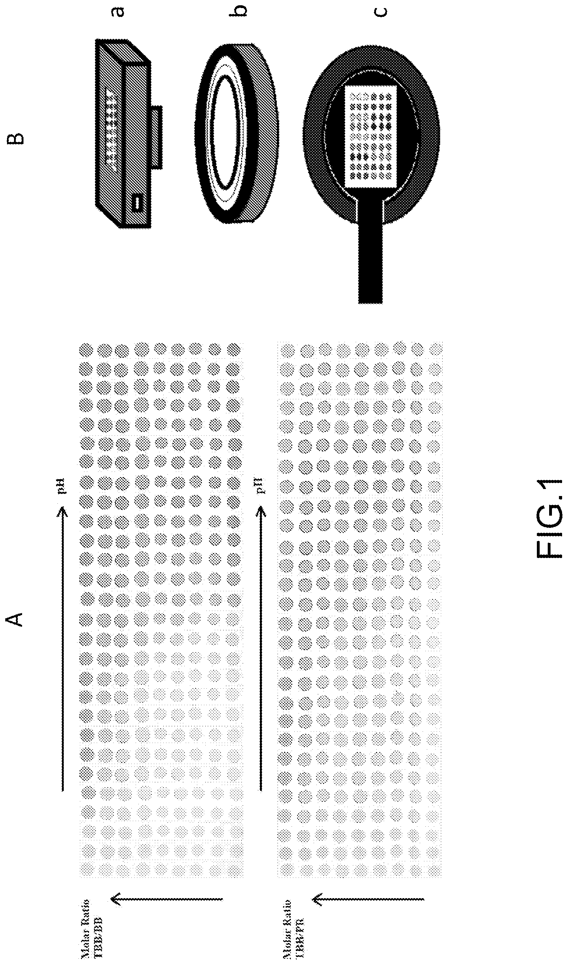

The array thus obtained is shown in figure 1.

From the above description, the benefits offered by present invention will be immediately apparent to those skilled in the art.

First, the sensor described considerably reduces the prediction error associated with the pH measurement, which is comparable with that typical of potentiometric measurements (<0.02 pH units) due to the modulation of the surfactant concentration.

In the case of an indicator characterized by a transition between non-complementary colors, the range within which the addition of a dye actually leads to an improvement in the precision and accuracy of the pH measurement has been identified.

In particular, a sensor was obtained capable of providing high accuracy in a wide pH range (up to 7 pH units), due to the modulation of the pKa of the indicator used.

Furthermore, the sensor is reversible and may therefore be reused.

The pH measurement is carried out with response times around ten seconds.

The *H* coordinate (hue) of the *HSV* color space (hue, saturation, value) used for the measurements is stable, simple to calculate and easily obtainable from commercial devices, maintaining better accuracy with variations in indicator concentration, membrane thickness and illumination, compared to the other color spaces.

A considerable benefit is the possibility of the manufacturer carrying out the calibration on a membrane only once.

Moreover, the device also lends itself to online measurements due to the use of a porous support such as PVDF; in fact, the permeation of Ormosil also from the opposite side of the PVDF sheet is possible due to the surfactant which reduces the surface tension, also allowing the pH measurement of turbid samples.

In addition, the device is suitable for measurements in sea water (pH = 7.0-8.5) where the high ionic strength of the solution results in a considerable variation of the electrode joint potential in glass.

The temperature dependence of the calibration profiles in the 10-30°C range has proven to be negligible.

The size of the spots is very small (around 1 mm in diameter), allowing to prepare portable, low-cost sensors.

## Claims

1. A colorimetric sensor array comprising a support and a plurality of colorimetric sensors deposited onto the support, wherein each colorimetric sensor comprises at least an indicator **characterized in that** it comprises a cationic surfactant, and **in that** each colorimetric sensor comprises a different concentration of the surfactant.

2. A colorimetric sensor array according to claim 1, wherein the colorimetric sensor array is a pH sensor.

3. A colorimetric sensor array according to any of the preceding claims, wherein each sensor is in the form of a polymeric membrane of organic-inorganic nature, comprising a preparation of an indicator in a suitable solvent and a cationic surfactant, precursors and acid or basic water.

4. A colorimetric sensor array according to the preceding claim, wherein the surfactant/precursor ratio is comprised between 0.05 and 0.40.

5. A colorimetric sensor array according to claim 3, wherein the surfactant/precursor ratio is comprised between 0.11 and 0.38.

6. A colorimetric sensor array according to any of the preceding claims, wherein the surfactant has a chain of 16 carbon atoms.

7. A colorimetric sensor array according to any of claims 1-5, wherein the surfactant has a chain of 18 carbon atoms.

8. A colorimetric sensor array according to any of the preceding claims, wherein each colorimetric sensor further comprising a dye or a combination of two or more dyes.

9. A colorimetric sensor array according to the preceding claim, wherein each colorimetric sensor comprises a different indicator and/or a different dye or different dyes with respect to the other sensors.

10. A colorimetric sensor array according to any one of the preceding claims, wherein said indicator is selected from the group comprising: Cresol Red; Metacresol Purple; Thymol Blue; Carmine; Tetrabromophenol Blue; Methyl Orange; 2-4-dinitrophenol; Bromophenol Blue; Congo Red; Ethyl Orange; Alizarin Violet N; Bromocresol Green; Methyl Red; Propyl Red; Chlorophenol Red; Basic Green 4; Bromophenol Red;Nitrazine Yellow; Purple Pyrocatecol Violet; Bright Yellow; Nile Red; Resazurin; Aurin; Bromothymol Blue; Phenol Red; Orange II; Phenolphthalein; Xylenol Blue; Nile Blue; Thiazole Yellow.

11. A colorimetric sensor array according to any one of the preceding claims, wherein said surfactant is hexadecyltrimethylammonium p-toluenesulfonate (CTApTs).

12. A colorimetric sensor array according to any one of the preceding claims, further comprising one or more additives capable of giving rise to chemical reactions with variation of pH.

13. A process for obtaining the colorimetric sensor array according to any one of the preceding claims, wherein for each sensor the process of obtaining the polymeric membrane comprises the steps of:
a) hydrolysis of the precursors,
b) addition of the cationic surfactant,
c) addition of a solution of the indicator dissolved in a suitable solvent, while stirring, or
d) addition of a solution of an indicator dissolved in a suitable solvent and a solution of one, two or more dyes dissolved in a suitable solvent.

14. A process according to the preceding claim, wherein said precursors are selected from the group comprising: TEOS (tetraethyl orthosilicate), methyltrimethoxysilane (MTES), ethyl-triethoxysilane (ETES),phenyltrimethoxysilane (FTMS), octyltriethoxysilane (octyl-TEOS), dodecyl- triethoxysilane (dodecyl-TEOS), hexadecyl-trimethoxysilane, zirconium tetrapropoxide (ZTP), 3-methacryloxypropyl-trimethoxysilane (MAPTMS), titanium tetrapropoxide (TTP), titanium isopropoxide(TTIP).

15. A process according to claim 13 or 14, wherein said step a) comprises the addition of an acid up to a pH of about 2.00.

16. A process according to any one of the claims 12 to 15, wherein in step c) or step d) one or more additives capable of giving rise to chemical reactions with variation of pH are added.

17. A method for measuring either pH, carbon dioxide, carbon monoxide, sulphur dioxide, amines, ethylene, sulphur dioxide, glucose, sugars of a solution comprising the steps of:
- placing the solution in contact with the colorimetric sensor array according to any one of the claims 1 to 11,
- acquiring a photographic image of said sensor or said array,
- acquiring the H coordinate of a portion of each image.

18. A method according to the preceding claim, wherein said step of acquiring the H coordinate is conducted online.

## Patentansprüche

1. Kolorimetriesensoranordnung, umfassend einen Träger und eine Vielzahl von Kolorimetriesensoren, aufgebracht auf dem Träger, wobei jeder Kolorimetriesensor mindestens einen Indikator umfasst,
**dadurch gekennzeichnet, dass** er ein kationisches Tensid umfasst und **dass** jeder Kolorimetriesensor eine unterschiedliche Konzentration des Tensids umfasst.

2. Kolorimetriesensoranordnung nach Anspruch 1, wobei die Kolorimetriesensoranordnung ein pH-Wert-Sensor ist.

3. Kolorimetriesensoranordnung nach einem der vorstehenden Ansprüche, wobei jeder Sensor in der Form einer polymeren Membran einer organischanorganischen Natur, umfassend eine Zubereitung eines Indikators in einem geeigneten Lösungsmittel und ein kationisches Tensid, Vorläufer und eine Säure oder basisches Wasser, vorliegt.

4. Kolorimetriesensoranordnung nach dem vorstehenden Anspruch, wobei das Verhältnis von Tensid/Vorläufer zwischen 0,05 und 0,40 beträgt.

5. Kolorimetriesensoranordnung nach Anspruch 3, wobei das Verhältnis von Tensid/Vorläufer zwischen 0,11 und 0,38 beträgt.

6. Kolorimetriesensoranordnung nach einem der vorstehenden Ansprüche, wobei das Tensid eine Kette mit 16 Kohlenstoffatomen aufweist.

7. Kolorimetriesensoranordnung nach einem der Ansprüche 1 bis 5, wobei das Tensid eine Kette mit 18 Kohlenstoffatomen aufweist.

8. Kolorimetriesensoranordnung nach einem der vorstehenden Ansprüche, wobei jeder Kolorimetriesensor ferner einen Farbstoff oder eine Kombination aus zwei oder mehr Farbstoffen umfasst.

9. Kolorimetriesensoranordnung nach dem vorstehenden Anspruch, wobei jeder Kolorimetriesensor einen unterschiedlichen Indikator und/oder einen unterschiedlichen Farbstoff oder unterschiedliche Farbstoffe hinsichtlich der anderen Sensoren umfasst.

10. Kolorimetriesensoranordnung nach einem der vorstehenden Ansprüche, wobei der Indikator aus der Gruppe ausgewählt ist, umfassend: Cresolrot; m-Cresolpurpur; Thymolblau; Carmin; Tetrabromphenolblau; Methylorange; 2-4-Dinitrophenol; Bromphenolblau; Kongorot; Ethylorange; Alizarinviolett N; Bromcresolgrün; Methylrot; Propylrot; Chlorphenolrot; Basic Green 4; Bromphenolrot;Nitrazingelb; Purpurpyrocatecolviolett; Hellgelb; Nilrot; Resazurin; Aurin; Bromthymolblau; Phenolrot; Orange II; Phenolphthalein; Xylenolblau; Nilblau; Thiazolgelb.

11. Kolorimetriesensoranordnung nach einem der vorstehenden Ansprüche, wobei das Tensid Hexadecyltrimethylammonium-p-toluolsulfonat (CTApTs) ist.

12. Kolorimetriesensoranordnung nach einem der vorstehenden Ansprüche, ferner umfassend ein oder mehrere Additive, die in der Lage sind, chemische Reaktionen mit pH-Wert-Variation zu verursachen.

13. Prozess zum Erhalten der Kolorimetriesensoranordnung nach einem der vorstehenden Ansprüche, wobei für jeden Sensor der Prozess zum Erhalten der polymeren Membran die Schritte umfasst:
a) Hydrolysieren der Vorläufer,
b) Zugeben des kationischen Tensids,
c) Zugeben einer Lösung des Indikators, gelöst in einem geeigneten Lösungsmittel, unter Rühren oder
d) Zugeben einer Lösung eines Indikators, gelöst in einem geeigneten Lösungsmittel, und einer Lösung von einem, zwei oder mehr Farbstoffen, gelöst in einem geeigneten Lösungsmittel.

14. Prozess nach dem vorstehenden Anspruch, wobei die Vorläufer aus der Gruppe ausgewählt sind, umfassend: TEOS (Tetraethylorthosilicat), Methyltrimethoxysilan (MTES), Ethyltriethoxysilan (ETES), Phenyltrimethoxysilan (FTMS), Octyltriethoxysilan (Octyl-TEOS), Dodecyltriethoxysilan (Dodecyl-TEOS), Hexadecyltrimethoxysilan, Zirconiumtetrapropoxid (ZTP), 3-Methacryloxypropyltrimethoxysilan (MAPTMS), Titantetrapropoxid (TTP), Titanisopropoxid (TTPIP).

15. Prozess nach Anspruch 13 oder 14, wobei der Schritt a) die Zugabe einer Säure bis zu einem pH-Wert von etwa 2,00 umfasst.

16. Prozess nach einem der Ansprüche 12 bis 15, wobei in Schritt c) oder Schritt d) ein oder mehrere Additive, die in der Lage sind, chemische Reaktionen mit pH-Wert-Variation zu verursachen, zugegeben werden.

17. Verfahren zum Messen eines von pH-Wert, Kohlendioxid, Kohlenmonoxid, Schwefeldioxid, Aminen, Ethylen, Schwefeldioxid, Glucose, Zuckern einer Lösung, umfassend die Schritte:
- Platzieren der Lösung in Berührung mit der Kolorimetriesensoranordnung nach einem der Ansprüche 1 bis 11,
- Erfassen eines fotografischen Bilds des Sensors oder der Anordnung,
- Erfassen der *H*-Koordinate eines Abschnitts jedes Bilds.

18. Verfahren nach dem vorstehenden Anspruch, wobei der Schritt des Erfassens der *H*-Koordinate online durchgeführt wird.

## Revendications

1. Réseau de capteurs colorimétriques comprenant un support et une pluralité de capteurs colorimétriques déposés sur le support, dans lequel chaque capteur colorimétrique comprend au moins un indicateur **caractérisé en ce qu'**il comprend un tensioactif cationique, et **en ce que** chaque capteur colorimétrique comprend une concentration différente du tensioactif.

2. Réseau de capteurs colorimétriques selon la revendication 1, dans lequel le réseau de capteurs colorimétriques est un capteur de pH.

3. Réseau de capteurs colorimétriques selon l'une quelconque des revendications précédentes, dans lequel chaque capteur est sous la forme d'une membrane polymère de nature organique-inorganique, comprenant une préparation d'un indicateur dans un solvant approprié et un tensioactif cationique, des précurseurs et une eau acide ou basique.

4. Réseau de capteurs colorimétriques selon la revendication précédente, dans lequel le rapport tensioactif/précurseur est compris entre 0,05 et 0,40.

5. Réseau de capteurs colorimétriques selon la revendication 3, dans lequel le rapport tensioactif/précurseur est compris entre 0,11 et 0,38.

6. Réseau de capteurs colorimétriques selon l'une quelconque des revendications précédentes, dans lequel le tensioactif a une chaîne de 16 atomes de carbone.

7. Réseau de capteurs colorimétriques selon l'une quelconque des revendications 1 à 5, dans lequel le tensioactif a une chaîne de 18 atomes de carbone.

8. Réseau de capteurs colorimétriques selon l'une quelconque des revendications précédentes, dans lequel chaque capteur colorimétrique comprend en outre un colorant ou une combinaison de deux colorants ou plus.

9. Réseau de capteurs colorimétriques selon la revendication précédente, dans lequel chaque capteur colorimétrique comprend un indicateur différent et/ou un colorant différent ou des colorants différents par rapport aux autres capteurs.

10. Réseau de capteurs colorimétriques selon l'une quelconque des revendications précédentes, dans lequel ledit indicateur est choisi dans le groupe comprenant : Rouge de crésol ; Violet de métacrésol ; Bleu de thymol ; Carmin ; Bleu de tétrabromophénol ; Méthylorange ; 2-4-dinitrophénol ; Bleu de bromophénol ; Rouge Congo ; Orange d'éthyle ; Violet d'alizarine N ; Vert de bromocrésol ; Rouge de méthyle ; Rouge de propyle ; Rouge de chlorophénol ; Vert basique 4 ; Rouge de bromophénol Jaune de nitrazine ; Violet de Pyrocatéchol ; Jaune vif ; Rouge de Nil ; Résazurine ; Aurine ; Bleu de bromothymol ; Rouge de phénol ; Orange II ; Phénolphthaléine ; Bleu de xylénol ; Bleu de Nil ; Jaune thiazol.

11. Réseau de capteurs colorimétriques selon l'une quelconque des revendications précédentes, dans lequel ledit tensioactif est le p-toluènesulfonate d'hexadécyltriméthylammonium (CTApTs).

12. Réseau de capteurs colorimétriques selon l'une quelconque des revendications précédentes, comprenant en outre un ou plusieurs additifs capables de donner lieu à des réactions chimiques avec variation de pH.

13. Procédé d'obtention du réseau de capteurs colorimétriques selon l'une quelconque des revendications précédentes, dans lequel pour chaque capteur le procédé d'obtention de la membrane polymère comprend les étapes consistant à :
a) hydrolyser les précurseurs,
b) ajouter le tensioactif cationique,
c) ajouter une solution de l'indicateur dissous dans un solvant approprié, sous agitation, ou
d) ajouter une solution d'un indicateur dissous dans un solvant approprié et une solution d'un ou deux colorants ou plus dissous dans un solvant approprié.

14. Procédé selon la revendication précédente, dans lequel lesdits précurseurs sont choisis dans le groupe comprenant : TEOS (orthosilicate de tétraéthyle), méthyltriméthoxysilane (MTES), éthyltriéthoxysilane (ETES), phényltriméthoxysilane (FTMS), octyltriéthoxysilane (octyl-TEOS), dodécyltriéthoxysilane (dodécyl-TEOS), hexadécyltriméthoxysilane, tétrapropoxyde de zirconium (ZTP), 3-méthacryloxypropyl-triméthoxysilane (MAPTMS), tétrapropoxyde de titane (TTP), isopropoxyde de titane (TTIP).

15. Procédé selon la revendication 13 ou 14, dans lequel ladite étape a) comprend l'ajout d'un acide jusqu'à un pH d'environ 2,00.

16. Procédé selon l'une quelconque des revendications 12 à 15, dans lequel à l'étape c) ou à l'étape d) un ou plusieurs additifs susceptibles de donner lieu à des réactions chimiques avec variation de pH sont ajoutés.

17. Procédé pour mesurer pH, dioxyde de carbone, monoxyde de carbone, dioxyde de soufre, amines, éthylène, dioxyde de soufre, glucose ou sucres d'une solution comprenant les étapes consistant à :
- placer la solution en contact avec le réseau de capteurs colorimétriques selon l'une quelconque des revendications 1 à 11,
- acquérir une image photographique dudit capteur ou dudit réseau,
- acquérir la coordonnée *H* d'une partie de chaque image.

18. Procédé selon la revendication précédente, dans lequel ladite étape d'acquisition de la coordonnée *H* est effectuée en ligne.
